# EUROPEAN PATENT APPLICATION

(11) **EP 4 273 074 A1**
(43) Date of publication of application: **08.11.2023**
(21) Application number: 21915097.6
(22) Date of filing: 15.12.2021
(51) Int. Cl.: B65G 43/00, B65G 43/08

(54) **INFORMATION PROCESSING DEVICE AND PROGRAM**

(30) Priority: 04.01.2021 JP 2021000158
(71) Applicant: KABUSHIKI KAISHA TOSHIBA, Minato-ku Tokyo 105-0023 (JP); Toshiba Infrastructure Systems & Solutions Corporation, Kawasaki-shi, Kanagawa 212-0013 (JP)
(72) Inventor: TORII, Moriaki, Kawasaki-shi, Kanagawa 212-0013 (JP); OHKAWA, Yasuhiro, Kawasaki-shi, Kanagawa 212-0013 (JP); AKAGI, Takuma, Kawasaki-shi, Kanagawa 212-0013 (JP); HIRAYAMA, Takashi, Kawasaki-shi, Kanagawa 212-0013 (JP); MINAMINO, Yuhi, Kawasaki-shi, Kanagawa 212-0013 (JP); ASANUMA, Reiya, Kawasaki-shi, Kanagawa 212-0013 (JP); FUJIHARA, Hiroaki, Kawasaki-shi, Kanagawa 212-0013 (JP)
(74) Representative: Horn Kleimann Waitzhofer Patentanwälte PartG mbB
(86) International application number: PCT/JP2021/046301
(87) International publication number: WO 2022/145236

(57) **Abstract**

According to an embodiment, an information processing device includes a first communication unit, second communication unit, and processor. The first communication unit transmits/receives data to/from a measurement device measuring, in a first transport mechanism transporting articles to an external device, a distance to each part in a predetermined region including the articles transported by the first transport mechanism. The second communication unit transmits/receives data to/from a speed control mechanism controlling a transport speed of a second transport mechanism transporting the articles to the first transport mechanism. The processor acquires distance information indicating the distance to each part in the predetermined region from the measurement device, sets a transport speed of the second transport mechanism based on the acquired distance information, and transmits speed information indicating the set transport speed of the second transport mechanism to the speed control mechanism.

## Description

### FIELD

Embodiments described herein relate generally to an information processing device and a program.

### BACKGROUND

A system for singulating and aligning articles such as externally supplied packages has been provided. The system is configured by a singulator that singulates and aligns the articles and the like. The system supplies the articles sequentially to the singulator using a belt conveyor and the like.

If the system supplies to the singulator articles beyond the processing capacity of the singulator, the system fails to singulate the articles, resulting in supplying the articles to the singulator again. Consequently, the throughput of the system decreases.

Furthermore, in the system, if fewer articles are transported to the singulator, the number of articles processed is lowered. Consequently, the throughput of the system decreases similarly.

### CITATION LIST

### PATENT LITERATURE

Patent Literature 1: Jpn. PCT National Publication No. 2018-507149

### SUMMARY

### TECHNICAL PROBLEM

To solve the above-described problems, an information processing device and a program capable of effectively controlling the amount of articles to be supplied are provided.

### SOLUTION TO PROBLEM

According to an embodiment, an information processing device includes a first communication unit, second communication unit, and processor. The first communication unit transmits/receives data to/from a measurement device measuring, in a first transport mechanism transporting articles to an external device, a distance to each part in a predetermined region including the articles transported by the first transport mechanism. The second communication unit transmits/receives data to/from a speed control mechanism controlling a transport speed of a second transport mechanism transporting the articles to the first transport mechanism. The processor acquires distance information indicating the distance to each part in the predetermined region from the measurement device through the first communication unit, sets a transport speed of the second transport mechanism based on the acquired distance information, and transmits speed information indicating the set transport speed of the second transport mechanism to the speed control mechanism through the second communication unit.

### BRIEF DESCRIPTION OF THE DRAWINGS

FIG. 1 is a diagram illustrating a configuration example of a logistics system according to an embodiment.
FIG. 2 is a block diagram illustrating a configuration example of a control device according to the embodiment.
FIG. 3 is a diagram illustrating an operation example of the logistics system according to the embodiment.
FIG. 4 is a diagram illustrating an example of a two-dimensional image according to the embodiment.
FIG. 5 is a diagram illustrating an example of a distance image according to the embodiment.
FIG. 6 is a diagram illustrating an example of a two-dimensional image according to the embodiment.
FIG. 7 is a diagram illustrating an example of a distance image according to the embodiment.
FIG. 8 is a diagram illustrating an example of a two-dimensional image according to the embodiment.
FIG. 9 is a diagram illustrating an example of a two-dimensional image according to the embodiment.
FIG. 10 is a diagram illustrating an example of a two-dimensional image according to the embodiment.
FIG. 11 is a diagram illustrating an operation example of the logistics system according to the embodiment.
FIG. 12 is a flowchart showing an operation example of the logistics system according to the embodiment.

### DETAILED DESCRIPTION

Hereinafter, embodiments will be described with reference to the drawings.

A logistics system according to an embodiment supplies articles to a singulator. In the logistics system, articles fed by a robot or an operator are transported on a feeding belt conveyor. In the logistics system, the articles are transferred from the feeding belt conveyor to a transport belt conveyor connected to the singulator. The logistics system uses the transport belt conveyor to supply the articles to the singulator. The logistics system supplies the articles singulated and aligned by the singulator to another device or the like.

For example, the logistics system is used in warehouses, factories, distribution centers, etc.

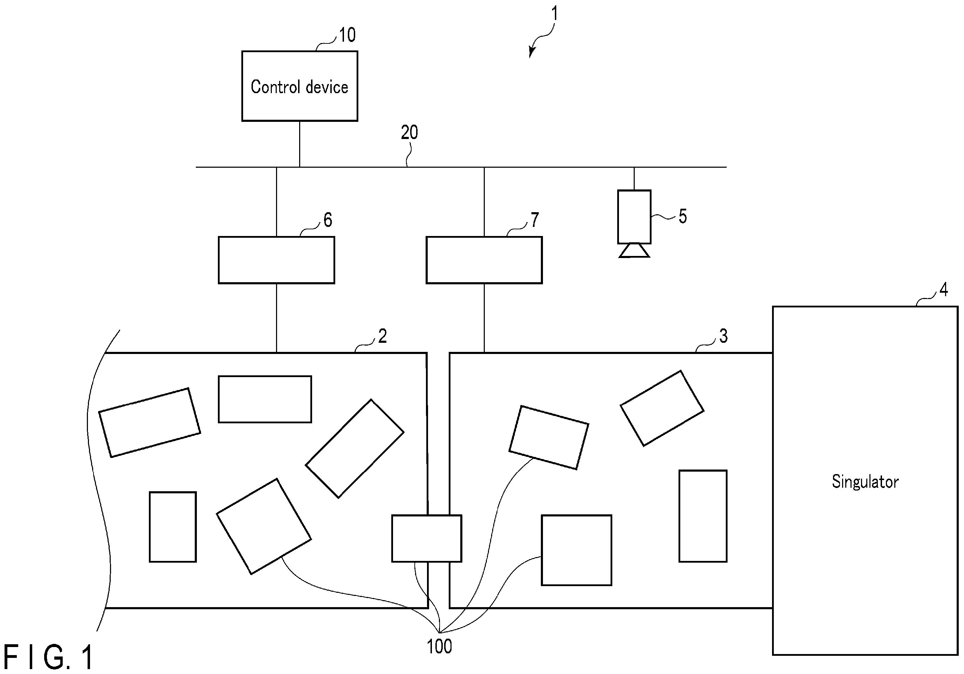

FIG. 1 shows a configuration example of a logistics system 1. As shown in FIG. 1, the logistics system 1 includes a feeding belt conveyor 2, a transport belt conveyor 3, a singulator 4, a three-dimensional camera 5, a speed control mechanism 6, an angle control mechanism 7, a control device 10, a network 20, and the like. The three-dimensional camera 5, the speed control mechanism 6, the angle control mechanism 7, and the control device 10 are communicably connected to the network 20. The speed control mechanism 6 is physically connected to the feeding belt conveyor 2 and the like. The angle control mechanism 7 is physically connected to the transport belt conveyor 3 and the like. The transport belt conveyor 3 is physically connected to the singulator 4.

Here, the logistics system 1 singulates and aligns articles 100.

The logistics system 1 may include other configurations as necessary in addition to the configuration shown in FIG. 1, or a specific configuration may be excluded from the logistics system 1.

The singulator 4 singulates the articles 100 (separates one by one) supplied to a feeding portion of the singulator 4 and aligns them in a predetermined direction. The singulator 4 supplies the singulated and aligned articles 100 to another device.

The singulator 4 (external device) can process a predetermined flow rate of articles 100 (a value based on the number of articles or the like) per unit time. If the predetermined flow rate or more of articles 100 are supplied in a unit time, the singulator 4 feeds the articles 100 that cannot be processed to a reject box or the like. Also in a case where the articles 100 overlap each other, the singulator 4 feeds the overlapping articles 100 and the like into a reject box or the like.

The singulator 4 includes a transport roller, a guide wall, and the like. The singulator 4 transports the articles 100 with the transports roller and presses them against the guide wall. The articles 100 pressed against the guide wall are aligned in a predetermined direction. The singulator 4 transports the articles 100 along the guide wall and supplies them to another device. Note that the configuration of the singulator 4 is not limited to a specific configuration.

The transport belt conveyor 3 (first transport mechanism) is a transport belt conveyor for transporting the articles 100 to the singulator 4. That is, the transport belt conveyor 3 transports the articles 100 toward the singulator 4 (from left to right in FIG. 1). One end (the right end in FIG. 1) of the transport belt conveyor 3 is connected to the feeding portion of the singulator 4. The transport belt conveyor 3 supplies the articles 100 from the one end to the feeding portion of the singulator 4.

The transport belt conveyor 3 includes a belt formed in an annular shape. The transport belt conveyor 3 is supported from the inside by a roller or the like formed therein. The transport belt conveyor 3 is rotated through rotation of the roller connected to a motor or the like. The transport belt conveyor 3 is rotated at a predetermined constant speed. That is, the transport belt conveyor 3 transports the articles 100 at a constant speed.

The feeding belt conveyor 2 (second transport mechanism) is a feeding belt conveyor for feeding the articles 100 into the transport belt conveyor 3. That is, the feeding belt conveyor 2 transports the articles 100 toward the transport belt conveyor 3 (from left to right in FIG. 1). One end (the right end in FIG. 1) of the feeding belt conveyor 2 is connected to the other end (the left end) of the transport belt conveyor 3. The feeding belt conveyor 2 supplies the articles 100 from the one end thereof to the other end of the transport belt conveyor 3.

The feeding belt conveyor 2 receives feeding of the articles 100 at the other end. For example, the other end of the feeding belt conveyor 2 is connected to a container into which the articles 100 are fed. The articles 100 are fed into the container by a robot or an operator. The feeding belt conveyor 2 picks up the articles 100 fed into the container and transports them to the transport belt conveyor 3.

The feeding belt conveyor 2 includes a belt formed in an annular shape. The feeding belt conveyor 2 is supported from the inside by a roller or the like formed therein. The feeding belt conveyor 2 is rotated through rotation of the roller connected to a motor or the like.

Here, the feeding belt conveyor 2 is formed horizontally on an extension line of the transport belt conveyor 3.

The three-dimensional camera 5 (measurement device) includes a two-dimensional camera that captures an image of an imaging region including the articles 100 on the transport belt conveyor 3, and a distance sensor that measures a distance to each part of the imaging region.

The three-dimensional camera 5 is installed at an upper part of the transport belt conveyor 3 so as to face downward.

The two-dimensional camera captures an image of the articles 100 that are being transported by the transport belt conveyor 3. The two-dimensional camera captures the image of the articles 100 and acquires an image (two-dimensional image). Here, the two-dimensional camera captures an image of the articles 100 in color. For example, the two-dimensional camera includes a charge coupled device (CCD) and the like.

The distance sensor measures a distance from each part of the imaging region to the distance sensor (or a distance to a plane horizontal to the distance sensor). The distance sensor generates distance information indicating a distance to each part. For example, the distance information indicates a coordinate of each point in a predetermined three-dimensional coordinate system.

For example, the distance sensor includes a light source and a sensor that detects reflected light of light emitted from the light source. The distance sensor measures a distance based on the reflected light of light (visible light or invisible light) emitted from the light source. For example, the distance sensor may perform a time-of-flight (ToF) method in which a distance to a measurement target is measured based on a time until emitted light is reflected by the measurement target and reaches the distance sensor.

The distance sensor may calculate a distance based on a parallax between images captured by two cameras (stereo camera).

The configuration of the distance sensor is not limited to a specific configuration.

If the distance sensor is configured by a stereo camera, the distance sensor may include a function as a two-dimensional camera.

The three-dimensional camera 5 transmits the two-dimensional image and the distance information to the control device 10.

The speed control mechanism 6 controls the speed at which the feeding belt conveyor 2 transports the articles 100 in accordance with a signal from the control device 10. That is, the speed control mechanism 6 controls the rotation speed (transport speed) of the feeding belt conveyor 2.

The speed control mechanism 6 receives speed information indicating the rotation speed of the feeding belt conveyor 2 from the control device 10. The speed control mechanism 6 controls the rotation speed of the feeding belt conveyor 2 to the rotation speed indicated by the speed information.

For example, the speed control mechanism 6 includes a motor connected to a roller for rotating the feeding belt conveyor 2, a drive circuit for driving the motor, and the like. The drive circuit of the speed control mechanism 6 generates a pulse or the like to be supplied to the motor in accordance with a signal from the control device 10. The motor of the speed control mechanism 6 is driven based on a pulse or the like from the drive circuit.

The angle control mechanism 7 controls an angle between the feeding belt conveyor 2 and the transport belt conveyor 3 in accordance with a signal from the control device 10. That is, the angle control mechanism 7 controls the angle between the feeding belt conveyor 2 and the transport belt conveyor 3 using an axis orthogonal to the traveling direction of the article 100 in a horizontal plane as a central axis.

The angle control mechanism 7 changes the angle between the feeding belt conveyor 2 and the transport belt conveyor 3 while maintaining the connection between one end (right end) of the feeding belt conveyor 2 and the other end (left end) of the transport belt conveyor 3. Here, the angle control mechanism 7 controls an elevation angle as the angle of the transport belt conveyor 3. That is, the angle control mechanism 7 controls the transport belt conveyor 3 from a horizontal state to a predetermined angle.

The angle control mechanism 7 receives angle information indicating an angle of the transport belt conveyor 3 from the control device 10. The angle control mechanism 7 controls the angle of the transport belt conveyor 3 to an angle indicated by the angle information.

The angle control mechanism 7 includes an actuator for changing the angle of the transport belt conveyor 3, a drive circuit for controlling the actuator, and the like. The drive circuit of the angle control mechanism 7 generates electric power or the like to be supplied to the actuator in accordance with a signal from the control device 10. The motor of the angle control mechanism 7 is driven based on electric power or the like from the drive circuit.

The control device 10 (information processing device) controls the rotation speed of the feeding belt conveyor 2 and the angle of the transport belt conveyor 3 based on the two-dimensional image, the distance information, and the like from the three-dimensional camera 5. The control device 10 will be described in detail later.

The network 20 relays communication among the three-dimensional camera 5, the speed control mechanism 6, the angle control mechanism 7, and the control device 10. For example, the network 20 is a local area network (LAN) or the like.

Next, the control device 10 will be described.

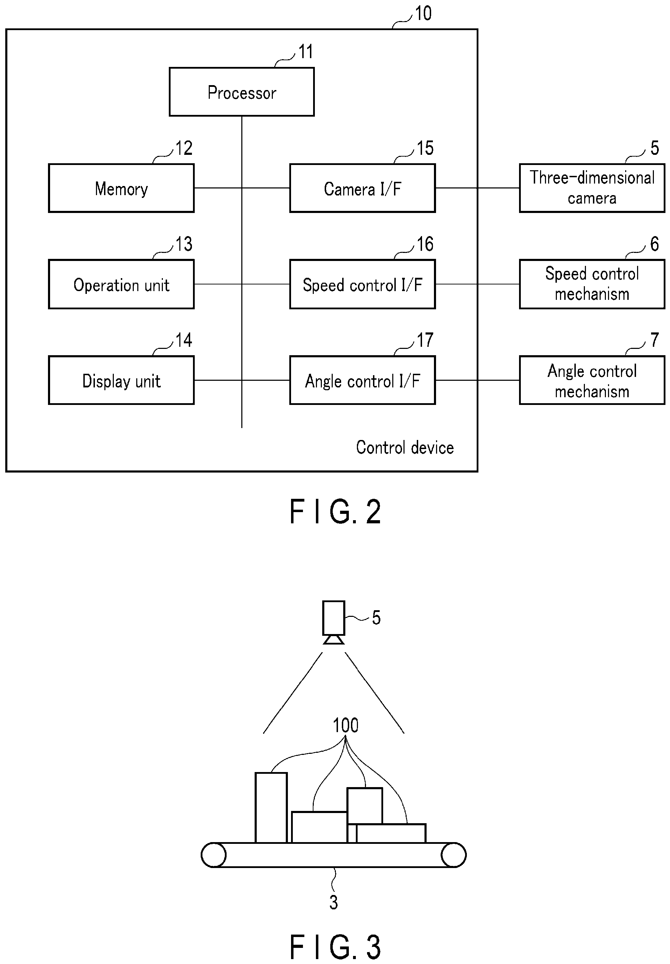

FIG. 2 shows a configuration example of the control device 10. As shown in FIG. 2, the control device 10 includes a processor 11, a memory 12, an operation unit 13, a display unit 14, a camera interface 15, a speed control interface 16, an angle control interface 17, and the like. The processor 11 is connected to the memory 12, the operation unit 13, the display unit 14, the camera interface 15, the speed control interface 16, and the angle control interface 17 through a data bus or a predetermined interface.

The control device 10 may include other configurations as necessary in addition to the configuration shown in FIG. 2, or a specific configuration may be excluded from the control device 10.

The processor 11 controls the entire operation of the control device 10. For example, the processor 11 controls the speed control mechanism 6, the angle control mechanism 7, and the like.

For example, the processor 11 includes a central processing unit (CPU) and the like. The processor 11 may include an application specific integrated circuit (ASIC) and the like. The processor 11 may include a field programmable gate array (FPGA) and the like.

The memory 12 stores various types of data. For example, the memory 12 functions as a ROM, a RAM, and an NVM.

For example, the memory 12 stores a control program, control data, and the like. The control program and the control data are incorporated in advance according to the specification of the control device 10. For example, the control program is a program that supports a function realized by the control device 10.

The memory 12 temporarily stores data being processed by the processor 11. The memory 12 may store data necessary for executing the application program, an execution result of the application program, and the like.

The operation unit 13 receives inputs of various operations from an operator. The operation unit 13 transmits a signal indicating the input operation to the processor 11. The operation unit 13 may be configured by a touch panel.

The display unit 14 displays image data from the processor 11. For example, the display unit 14 includes a liquid crystal monitor. If the operation unit 13 is configured by a touch panel, the display unit 14 may be integrally formed with the operation unit 13.

The camera interface 15 (first communication unit) is an interface for transmitting and receiving data to and from the three-dimensional camera 5. For example, the camera interface 15 transmits a signal for instructing the three-dimensional camera 5 to capture an image and measure a distance based on the control of the processor 11. The camera interface 15 also acquires a two-dimensional image and distance information from the three-dimensional camera 5. For example, the camera interface 15 supports LAN connection.

The speed control interface 16 (second communication unit) is an interface for transmitting and receiving data to and from the speed control mechanism 6. For example, the speed control interface 16 supplies speed information indicating the rotation speed of the feeding belt conveyor 2 to the speed control mechanism 6 under the control of the processor 11. For example, the speed control interface 16 supports LAN connection.

The angle control interface 17 (third communication unit) is an interface for transmitting and receiving data to and from the angle control mechanism 7. For example, the angle control interface 17 supplies angle information indicating the angle of the transport belt conveyor 3 to the angle control mechanism 7 under the control of the processor 11. For example, the angle control interface 17 supports LAN connection.

Note that the speed control interface 16 and the angle control interface 17 may be integrally formed.

For example, the control device 10 is a desktop PC, a laptop PC, a tablet PC, or the like.

Next, functions realized by the control device 10 will be described. The functions realized by the processor 11 are realized when the processor 11 executes a program stored in an internal memory, the memory 12, or the like.

First, the processor 11 has a function of acquiring a two-dimensional image obtained by capturing an image of the articles 100 and distance information corresponding to the two-dimensional image.

FIG. 3 illustrates an operation example of the processor 11 acquiring the two-dimensional image and the distance information. As shown in FIG. 3, it is assumed that the articles 100 are loaded on the transport belt conveyor 3. Furthermore, it is assumed that the transport belt conveyor 3 is rotated at a predetermined speed to transport the articles 100. It is assumed that the feeding belt conveyor 2 is rotated in a similar manner to transport the articles 100.

The processor 11 transmits, to the three-dimensional camera 5, a signal instructing it to capture an image and measure a distance through the camera interface 15 at a predetermined timing (for example, at a predetermined interval).

Here, the three-dimensional camera 5 receives the signal. Upon receipt of the signal, the three-dimensional camera 5 acquires, using the two-dimensional camera and the distance sensor, a two-dimensional image and distance information corresponding to the two-dimensional image. Upon acquiring the two-dimensional image and the distance information, the three-dimensional camera 5 transmits the acquired two-dimensional image and distance information to the control device 10.

The processor 11 acquires the two-dimensional image and the distance information from the three-dimensional camera 5 through the camera interface 15.

The processor 11 has a function of extracting an article region in which the article 100 appears from the two-dimensional image based on the two-dimensional image and the distance information.

For example, the processor 11 extracts a region (candidate region) serving as a candidate for the article region based on the two-dimensional image. The processor 11 extracts a candidate region in accordance with a predetermined algorithm such as edge detection or image processing using a neural network.

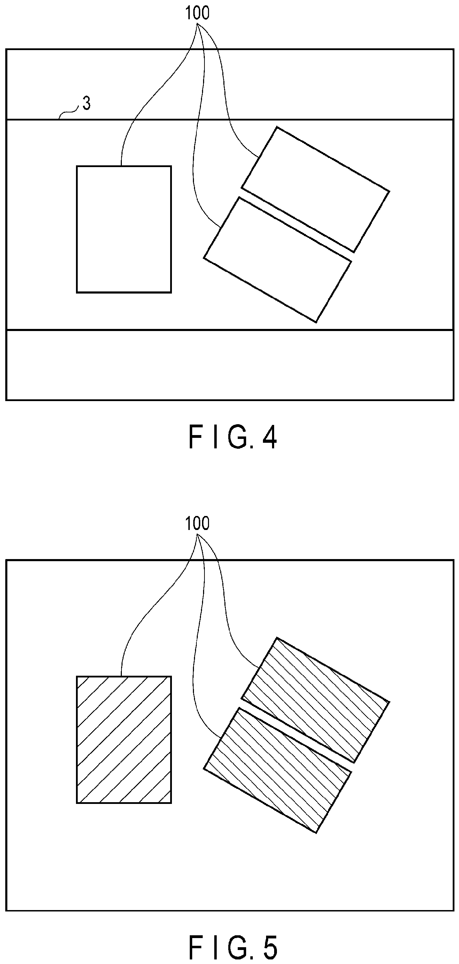

FIG. 4 shows an example of a two-dimensional image acquired by the processor 11. As shown in FIG. 4, the two-dimensional image includes three articles 100 loaded on the transport belt conveyor 3.

The processor 11 extracts a candidate region of the article region in which the article 100 appears in accordance with a predetermined algorithm.

Furthermore, the processor 11 extracts a candidate region based on the distance information.

The processor 11 generates a distance image indicating a distance in each dot based on the distance information. The distance image has a luminance value corresponding to a distance in each dot.

FIG. 5 shows an example of a distance image generated by the processor 11. In the example shown in FIG. 5, each dot of the distance image has a lower luminance value as it comes closer to the three-dimensional camera 5. For example, each dot of the distance image has a predetermined luminance value (for example, 255) serving as a reference at the distance from the transport belt conveyor 3. That is, each dot of the distance image has a luminance value corresponding to the height from the transport belt conveyor 3.

The processor 11 extracts a candidate region based on the distance image. For example, the processor 11 extracts a region having a luminance value higher than a predetermined threshold as a candidate region.

The processor 11 extracts an article region based on the candidate region of the two-dimensional image and the candidate region of the distance image. For example, if there are a plurality of candidate regions of the distance image in the candidate region of the two-dimensional image, the processor 11 extracts the candidate regions of the distance image as article regions. If there are a plurality of candidate regions of the two-dimensional image in the candidate region of the distance image, the processor 11 extracts the candidate regions of the two-dimensional image as article regions.

If a shadow is included in the candidate region in the two-dimensional image, the processor 11 may extract an article region by deleting the shadow part based on the distance image.

The processor 11 may extract an article region based on the two-dimensional image without using the distance information. The processor 11 may extract an article region based on the distance information without using the two-dimensional image.

A method of extracting an article region by the processor 11 is not limited to a specific method.

The processor 11 has a function of calculating a flow rate of the articles 100 appearing in the two-dimensional image.

The flow rate is an index related to the quantity of articles 100 transported to the singulator 4 by the transport belt conveyor 3. Here, the flow rate is an index based on the number of articles 100 appearing in the two-dimensional image, the volume of articles 100, and the proportion (density) of the article region in the two-dimensional image. For example, the flow rate is a value obtained by substituting the number of articles 100, the volume of articles 100, and the density into a predetermined evaluation function.

The processor 11 specifies the number of articles 100 based on the extracted article regions. That is, the processor 11 specifies the number of article regions as the number of articles 100.

The processor 11 calculates the volume of articles 100 based on the article region and the distance information. Here, the processor 11 calculates a total volume of articles 100 appearing in the two-dimensional image.

For example, the processor 11 calculates an area of the article region. Upon calculating the area, the processor 11 calculates a height of the article region (height from the transport belt conveyor 3) based on the distance information. Upon calculating the height, the processor 11 multiplies the area by the height, thereby calculating a volume of the article 100. The processor 11 performs the same operation for each article 100 to calculate the volume of each article 100. Upon calculating the volume of each article 100, the processor 11 sums up the respective volumes.

Furthermore, the processor 11 calculates a density from the two-dimensional image and the article regions. For example, the processor 11 sums up the areas of the article regions. Upon summing up the areas of the article regions, the processor 11 subtracts the summed areas from the area of the two-dimensional image, thereby calculating a density.

Upon calculating the number of articles 100, the volume of articles 100, and the density, the processor 11 calculates a flow rate based on the number, the volume, and the density.

A method of calculating the flow rate by the processor 11 is not limited to a specific method.

The processor 11 has a function of detecting overlapping of the articles 100 based on the two-dimensional image and the distance information.

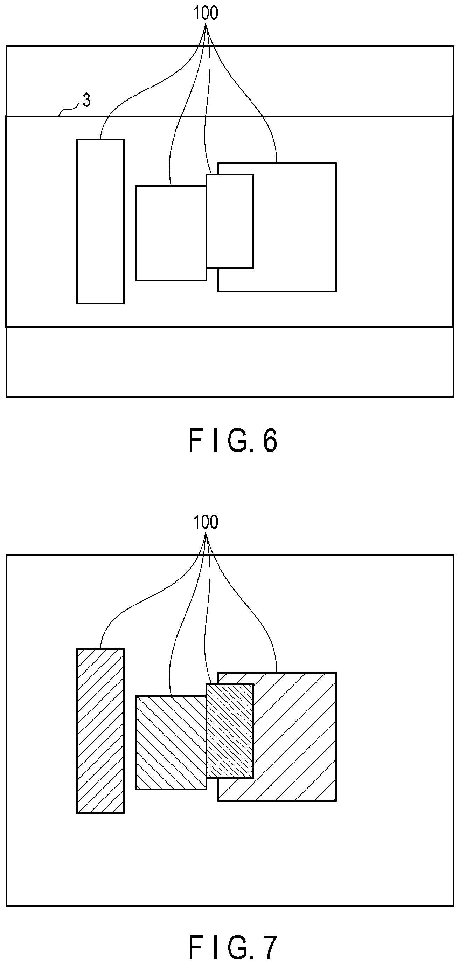

FIG. 6 shows an example of a two-dimensional image in which the articles 100 overlap. In the example shown in FIG. 6, one article 100 overlies other articles 100 on the transport belt conveyor 3.

FIG. 7 shows an example of a distance image corresponding to the two-dimensional image of FIG. 6. As shown in FIG. 7, an article region of the article 100 that overlaps other articles 100 is higher than other article regions.

As described above, the processor 11 extracts article regions based on the two-dimensional image, the distance information, and the like. Upon extracting the article regions, the processor 11 determines whether the extracted article regions overlap each other. Upon determining that the article regions overlap each other, the processor 11 determines that the articles 100 overlap each other.

The processor 11 may detect overlapping of the articles 100 based on the height of each dot in the article region. For example, the processor 11 may determine that the articles 100 overlap each other if a height difference (for example, a difference between the highest point and the lowest point) exceeds a predetermined threshold in the article region.

A method of detecting overlapping of the articles 100 by the processor 11 is not limited to a specific method.

The processor 11 has a function of controlling the rotation speed of the feeding belt conveyor 2 based on the calculated flow rate.

Here, it is assumed that the feeding belt conveyor 2 is rotated at a predetermined speed by the speed control mechanism 6.

The processor 11 compares the flow rate with a predetermined reference amount. The reference amount is a flow rate that can be processed by the singulator 4 (or an upper limit of the flow rate that can be processed).

The processor 11 changes the speed of the feeding belt conveyor 2 if the difference between the flow rate and the reference amount exceeds a predetermined threshold.

First, a case where the flow rate is smaller than the reference amount will be described.

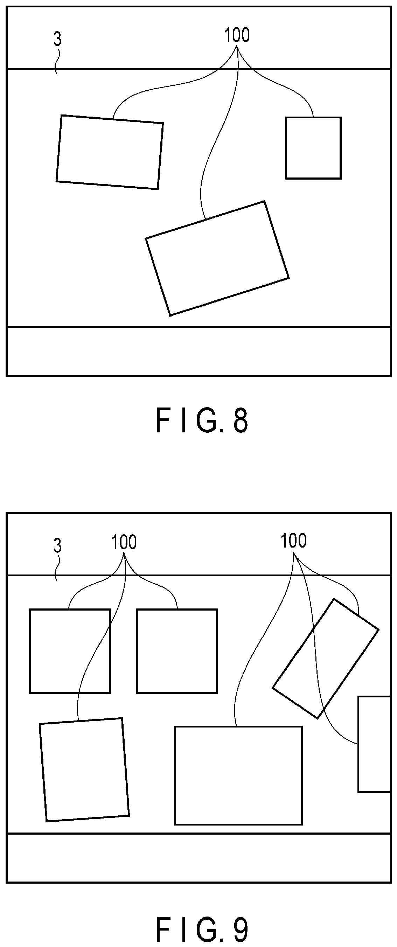

FIG. 8 illustrates an example of a two-dimensional image showing the articles 100 in which the flow rate is less than a reference amount. As shown in FIG. 8, the two-dimensional image shows relatively sparse articles 100.

If the difference between the flow rate and the reference amount is greater than or equal to the predetermined threshold and the flow rate is smaller than the reference amount, the processor 11 sets a rotation speed faster than the current rotation speed of the feeding belt conveyor 2.

For example, the processor 11 may set a rotation speed obtained by adding a predetermined value to the current rotation speed. Furthermore, the processor 11 may set a rotation speed based on the difference between the flow rate and the reference amount. For example, the processor 11 may set a faster rotation speed as the difference between the flow rate and the reference amount becomes greater.

Upon setting the rotation speed faster than the current rotation speed, the processor 11 generates speed information indicating the set rotation speed. Upon generating the speed information, the processor 11 transmits the generated speed information to the speed control mechanism 6 through the speed control interface 16.

Here, the speed control mechanism 6 receives the speed information from the control device 10. Upon receiving the speed information, the speed control mechanism 6 controls the rotation speed of the feeding belt conveyor 2 to the rotation speed indicated by the received speed information.

Next, a case where the difference between the flow rate and the reference amount is smaller than a predetermined threshold will be described.

FIG. 9 illustrates an example of a two-dimensional image showing the articles 100 in which the difference between the flow rate and the reference amount is smaller than a predetermined threshold. As shown in FIG. 9, the two-dimensional image shows more articles 100 as compared to the two-dimensional image of FIG. 8.

If the difference between the flow rate and the reference amount is smaller than the predetermined threshold, the processor 11 generates speed information indicating the current rotation speed of the feeding belt conveyor 2. Upon generating the speed information, the processor 11 transmits the generated speed information to the speed control mechanism 6 through the speed control interface 16.

Here, the speed control mechanism 6 receives the speed information from the control device 10. Upon receiving the speed information, the speed control mechanism 6 controls the rotation speed of the feeding belt conveyor 2 to the rotation speed indicated by the received speed information. That is, the speed control mechanism 6 maintains the current rotation speed.

If the difference between the flow rate and the reference amount is smaller than the predetermined threshold, the processor 11 does not necessarily transmit the speed information to the speed control mechanism 6.

Next, a case where the flow rate is greater than the reference amount will be described.

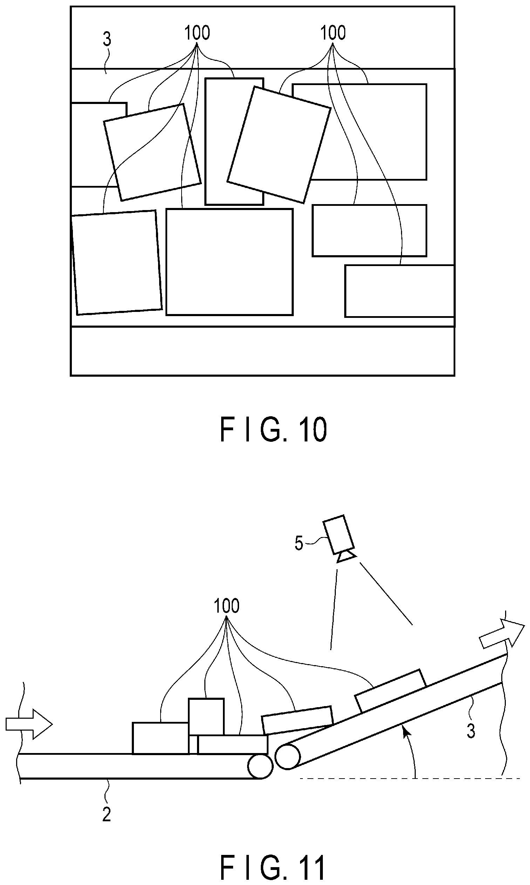

FIG. 10 shows an example of a two-dimensional image showing the articles 100 in which the flow rate is greater than the reference amount. As shown in FIG. 10, the two-dimensional image shows more articles 100 than the two-dimensional image of FIG. 9.

If the difference between the flow rate and the reference amount is equal to or greater than a predetermined threshold and the flow rate is greater than the reference amount, the processor 11 sets a rotation speed slower than the current rotation speed of the feeding belt conveyor 2.

For example, the processor 11 may set a rotation speed obtained by subtracting a predetermined value from the current rotation speed. The processor 11 may set a rotation speed based on the difference between the flow rate and the reference amount. For example, the processor 11 may set a slower rotation speed as the difference between the flow rate and the reference amount increases.

Upon setting the rotation speed slower than the current rotation speed, the processor 11 generates speed information indicating the set rotation speed. Upon generating the speed information, the processor 11 transmits the generated speed information to the speed control mechanism 6 through the speed control interface 16.

Here, the speed control mechanism 6 receives the speed information from the control device 10. Upon receiving the speed information, the speed control mechanism 6 controls the rotation speed of the feeding belt conveyor 2 to the rotation speed indicated by the received speed information.

The processor 11 has a function of controlling the angle of the transport belt conveyor 3 upon detecting overlapping of the articles 100.

Here, it is assumed that the transport belt conveyor 3 is horizontal.

Upon detecting the overlapping of the articles 100 (for example, in the state of FIG. 10), the processor 11 changes the angle between the feeding belt conveyor 2 and the transport belt conveyor 3. That is, the processor 11 sets an angle between the feeding belt conveyor 2 and the transport belt conveyor 3 from a state in which they are on a straight line. Here, the processor 11 changes the angle of the transport belt conveyor 3 from a horizontal state (here, 0 degree) to a predetermined value using the angle control mechanism 7.

Upon detecting the overlapping of the articles 100, the processor 11 sets an angle of the transport belt conveyor 3. For example, the processor 11 sets a predetermined angle. The processor 11 may set an angle obtained by adding or subtracting a predetermined value to or from the current angle of the transport belt conveyor 3.

Upon setting the angle of the transport belt conveyor 3, the processor 11 generates angle information indicating the set angle. Upon generating the angle information, the processor 11 transmits the generated angle information to the angle control mechanism 7 through the angle control interface 17.

Here, the angle control mechanism 7 receives angle information from the control device 10. Upon receipt of the angle information, the angle control mechanism 7 controls the angle of the transport belt conveyor 3 to the angle indicated by the received angle information.

FIG. 11 shows an example in which the processor 11 changes the angle of the transport belt conveyor 3. In the example shown in FIG. 11, the processor 11 changes the angle of the transport belt conveyor 3 so that the transport belt conveyor 3 faces upward.

The processor 11 may change the angle of the transport belt conveyor 3 so that the transport belt conveyor 3 faces downward.

Furthermore, in a case where overlapping of the articles 100 is not eliminated even though the angle of the transport belt conveyor 3 is changed, the processor 11 may further change the angle of the transport belt conveyor 3

If the overlapping of the articles 100 is eliminated, the processor 11 may return the angle of the transport belt conveyor 3 to the horizontal.

Next, an operation example of the control device 10 will be described.

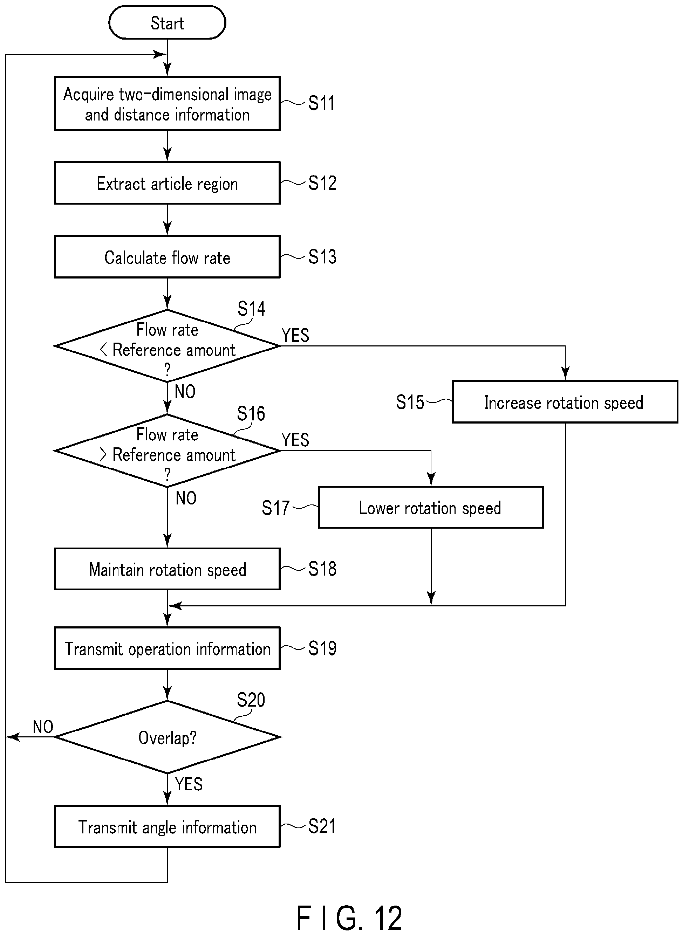

FIG. 12 is a flowchart for explaining an operation example of the control device 10.

Here, it is assumed that the feeding belt conveyor 2 is rotated at a predetermined speed to transport the articles 100. It is also assumed that the transport belt conveyor 3 is rotated at a predetermined speed to transport the articles 100 from the feeding belt conveyor 2 to the singulator 4.

The processor 11 of the control device 10 acquires a two-dimensional image and distance information from the three-dimensional camera 5 through the camera interface 15 (S11). Upon acquiring the two-dimensional image and the distance information, the processor 11 extracts an article region based on the two-dimensional image and the distance information (S12).

Upon extracting the article region, the processor 11 calculates a flow rate based on the article region and the like (S13). Upon calculating the flow rate, the processor 11 determines whether the flow rate is smaller than a reference amount (S14).

Upon determining that the flow rate is smaller than the reference amount (S14, YES), the processor 11 sets a rotation speed faster than the current rotation speed of the feeding belt conveyor 2 (S15).

Upon determining that the flow rate is not smaller than the reference amount (S14, NO), the processor 11 determines whether the flow rate is greater than the reference amount (S16).

Upon determining that the flow rate is greater than the reference amount (S16, YES), the processor 11 sets a rotation speed slower than the current rotation speed of the feeding belt conveyor 2 (S17).

Upon determining that the flow rate is not greater than the reference amount (S16, NO), the processor 11 sets the current rotation speed of the feeding belt conveyor 2 (S18) .

If the faster rotation speed is set (S15), the slower rotation speed is set (S17), or the current rotation speed is set (S18), the processor 11 transmits speed information indicating the rotation speed set in S15, S17, or S18 to the speed control mechanism 6 through the speed control interface 16 (S19).

Upon transmitting the speed information to the speed control mechanism 6, the processor 11 determines whether the articles 100 overlap (S20).

Upon determining that the articles 100 overlap (S20, YES), the processor 11 transmits angle information indicating a predetermined angle to the angle control mechanism 7 through the angle control interface 17 (S21).

If it is determined that the articles 100 do not overlap (S20, NO) or the angle information is transmitted to the angle control mechanism 7 (S21), the processor 11 returns the processing to S11. The processor 11 may return the processing to S11 after waiting for a predetermined time.

The three-dimensional camera 5 may capture an image of the article 100 on the feeding belt conveyor 2. In this case, the three-dimensional camera 5 may measure a distance to each part on the feeding belt conveyor 2.

The processor 11 may display the rotation speed of the feeding belt conveyor 2 on the display unit 14 or the like. The processor 11 may display an alert or the like on the display unit 14 or the like upon detecting overlapping of the articles 100.

The logistics system 1 may include the two-dimensional camera that captures an image and the distance sensor that measures a distance individually.

The logistics system configured as described above calculates the flow rate of articles to be supplied to the singulator. The logistics system controls the rotation speed of the feeding belt conveyor for feeding articles so that the flow rate becomes a reference amount. Thus, the logistics system can supply an appropriate quantity of articles to the singulator. Therefore, the logistics system can improve throughput.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. An information processing device comprising:
a first communication unit configured to transmit and receive data to and from a measurement device configured to measure, in a first transport mechanism configured to transport articles to an external device, a distance to each part in a predetermined region including the articles transported by the first transport mechanism;
a second communication unit configured to transmit and receive data to and from a speed control mechanism configured to control a transport speed of a second transport mechanism configured to transport the articles to the first transport mechanism; and
a processor configured to:
acquire distance information indicating the distance to each part in the predetermined region from the measurement device through the first communication unit;
set a transport speed of the second transport mechanism based on the acquired distance information; and
transmit speed information indicating the set transport speed of the second transport mechanism to the speed control mechanism through the second communication unit.

2. The information processing device according to claim 1,
wherein the processor is configured to:
calculate a volume of the articles based on the distance information; and
set a transport speed of the second transport mechanism based on the volume.

3. The information processing device according to claim 2,
wherein the processor is configured to:
specify a number of the articles based on the distance information; and
set a transport speed of the second transport mechanism based further on the number.

4. The information processing device according to claim 3,
wherein the processor is configured to:
calculate a density of the articles based on the distance information; and
set a transport speed of the second transport mechanism based further on the density.

5. The information processing device according to claim 4,
wherein the processor is configured to:
calculate a flow rate of the articles based on the volume, the number, and the density; and
set a transport speed of the second transport mechanism based on the flow rate.

6. The information processing device according to claim 5,
wherein the processor is configured to:
set, if the flow rate is smaller than a reference amount, a transport speed faster than a current transport speed of the second transport mechanism as the transport speed of the second transport mechanism; and
set, if the flow rate is greater than the reference amount, a transport speed slower than the current transport speed of the second transport mechanism as the transport speed of the second transport mechanism.

7. The information processing device according to any one of claims 1 to 6 comprising:
a third communication unit configured to transmit and receive data to and from an angle control mechanism configured to control an angle between the first transport mechanism and the second transport mechanism,
wherein the processor is configured to transmit, if the articles overlap in the second transport mechanism, angle information indicating a predetermined angle as an angle between the first transport mechanism and the second transport mechanism to the angle control mechanism through the third communication unit.

8. The information processing device according to claim 7,
wherein the processor is configured to detect overlapping of the articles based on the distance information.

9. The information processing device according to any one of claims 1 to 8,
wherein the processor is configured to:
acquire a two-dimensional image obtained by capturing an image of the region from the measurement device through the first communication unit; and
set a transport speed of the second transport mechanism based further on the two-dimensional image.

10. The information processing device according to any one of claims 1 to 9,
wherein the external device is a singulator.

11. The information processing device according to any one of claims 1 to 10,
wherein the first transport mechanism and the second transport mechanism are belt conveyors.

12. A program executed by a processor,
the program causing the processor to realize:
a function of acquiring, in a first transport mechanism configured to transport articles to an external device, distance information indicating a distance to each part in a predetermined region including the articles transported by the first transport mechanism;
a function of setting a transport speed of a second transport mechanism configured to transport the articles to the first transport mechanism based on the acquired distance information; and
a function of transmitting speed information indicating the set transport speed of the second transport mechanism to a speed control mechanism configured to control the transport speed of the second transport mechanism.
